# EUROPÄISCHE PATENTSCHRIFT

(11) **EP 1 794 231 B1**
(45) Veröffentlichungstag und Bekanntmachung des Hinweises auf die Patenterteilung: **29.06.2011**
(21) Anmeldenummer: 05791847.6
(22) Anmeldetag: 10.09.2005
(51) Int. Cl.: C08K 13/02

(54) **INTUMESZIERENDE, FLEXIBLE UND UMWELTRESISTENTE BRANDSCHUTZSTREIFEN**
INTUMESCENT, FLEXIBLE AND ENVIRONMENT-RESISTANT FIREPROOFING STRIPS
BANDES DE PROTECTION CONTRE LE FEU INTUMESCENTES, SOUPLES ET RESISTANTES AUX CONDITIONS DE L'ENVIRONNEMENT

(30) Priorität: 01.10.2004 AT 16392004
(43) Veröffentlichungstag der Anmeldung: 13.06.2007
(73) Patentinhaber: Intumex GmbH, 4021 Linz (AT)
(72) Erfinder: HORACEK, Heinrich, A-4040 Linz (AT); WILLERT, Gerhard, A-4223 Katsdorf (AT)
(74) Vertreter: Landgraf, Elvira
(86) Internationale Anmeldenummer: PCT/EP2005/009738
(87) Internationale Veröffentlichungsnummer: WO 2006/037423

(56) Entgegenhaltungen:
- EP-A- 0 730 000
- EP-A- 1 207 183
- DE-A1- 4 135 678
- DATABASE WPI Section Ch, Week 199409 Derwent Publications Ltd., London, GB; Class A17, AN 1994-072063 XP002356536 & JP 06 025485 A (null) 1. Februar 1994 (1994-02-01)

## Beschreibung

Die Erfindung betrifft intumeszierende, flexible und umweltresistente Streifen auf Basis von Vermikular-Graphit, die aus wasserunlöslichen Komponenten bestehen und im Brandschutz eingesetzt werden.

Flexible Bändchen, die unter Feuereinwirkung aufschäumen und eine Heißgasdichtung bilden, sind bekannt. Sie werden, wie etwa in US 6,207,085 beschrieben, aus thermoplastischen Dispersionen mit Glastemperatur kleiner -40°C, Blähgraphit, einem Flammhemmer, vorzugsweise ein Alkyldiaminphosphat, und gegebenenfalls Füllstoffen hergestellt.

Gegenstand von EP 0 408 098 sind flexible Bändchen, die nach der Papiertechnclogie hergestellt werden und die aus Graphit, einem organischen Bindemittel, Mineralfasern und Ton bestehen.

EP 0 302 987 beschreibt thermoplastische Feuerschutzstreifen, die aus Blähgraphit, einem bei 150°C oder weniger thermoplastisch verarbeitbarem Polymeren und einer Mischung, enthaltend mindestens zwei Komponenten aus der Gruppe der Phosphate, der Polyamide und der mehrwertigen Alkohole, durch Extrusion hergestellt werden.

EP-A-730 000 offenbart eine Brandschutzzusammensetzung, bestehend aus
a) 100 Gew% eines Polymers
b) 1 - 30 Gew-Teile eines wärmeexpandierbaren Graphits
c) 1 - 30 Gew-Teile einer Phosphor-Komponente
wobei das Polymer aus der Gruppe der Polystyrole, Elastomere, Polyurethane und Polysiloxane ausgewählt ist und der wäremexpandierbare Graphit sein spezifische Volumen bei schneller Erhitzung von Raumtemperatur auf 800 - 1000°C um 100 ml/g oder mehr verändert.

In EP-A 1 207 183 werden Formmassen geoffenbart, die zu aufschäumenden Brandschutzformmassen weiterverarbeitet werden.

DE 41 35 678 A1 offenbart thermisch expandierbare Brandschutzmassen, die Blähgraphit, polymere Bindemittel, Substanzen, die im Brandfall ein Kohlenstoffgerüst bilden und Mikrohohlkugeln enthalten. Diese Massen können in Form von Laminaten oder Trägerbahnen aufgebracht sein.

Databases WPI section Ch Week 199909 Derwent Publications Ltfd.; London GB, Class A17, AN 1994-072063 XP002356536 & JP 06 025484 A offenbart ähnliche Zusammensetzungen.

Ungelöst trotz massiver Anstrengungen sind die lockere Struktur des expandierten Graphits, seine Gasdurchlässigkeit und seine hohe Wärmeleitfähigkeit, sowie seine Brennbarkeit. Diese Mängel sollen durch die Zugabe von Flammhemmem gemildert oder beseitigt werden. Allerdings verursacht der Einsatz solcher Flammhemmer aufgrund ihrer Wasserlöslichkeit neue Probleme. Die Flammhemmer werden herausgelöst oder ausgewaschen, so dass ihre Wirksamkeit mit der Zeit abnimmt. Die gelösten Flammhemmer verursachen bei Anwendungen auf Stahl Korrosion und bei rostfreien Materialien hinterlassen sie ungewünschte Verfärbungen oder andere Spuren. Ein anderes ungelöstes Problem ergibt sich bei der Ausrüstung dieser Streifen mit Selbstklebefolien aus Polyacrylat- oder Kautschuk-Klebstoffen. Wegen der Unverträglichkeit der Kunststoffe sind die Adhäsionskräfte zwischen unterschiedlichen Polymeren, wie sie bei Streifen aus Polyolefinen und Klebstoffen aus Polyacrylaten oder Polyisoprenen vorliegen, sehr gering. Trotzdem wird eine feste Klebeverbindung gewünscht, um zeitaufwendige mechanische Befestigungen zu vermeiden.

Aufgabe der vorliegenden Erfindung war es demnach neue flexible Brandschutzstreifen zu finden, die gegen Umwelteinflüsse resistent sind, eine kraftbündige Verbindung mit dem Klebstoff eingehen und eine gegenüber dem Stand der Technik erhöhte Brandwiderstandszeit aufweisen.

Unerwarteterweise konnte diese Aufgabe durch die Verwendung von wasserunlöslichen, flexiblen Thermoplasten und rotem Phosphor als Flammhemmem in Kombination mit V-Graphit und in Kombination mit einem Haftvermittler auf Basis von Methacrylsäure-, Acrylsäure- oder Maleinsäureanhydrid-propfpolymeren für Polyolefine/EVA und mit einem Haftvermittler auf Basis von Polyisocyanaten für PVC gelöst werden. Gegenstand der vorliegenden Erfindung sind demnach intumeszierende, flexible Brandschutzstreifen mit, bestehend aus einem flexiblen, wasserunlöslichen Thermoplasten, V-Graphit und rotem Phosphor, dadurch gekennzeichnet, dass die Brandschutzstreifen zusätzlich Borphosphat und/oder einen Haftvermittler aus Acrylsäure-, Methacrylsäure- oder Maleinsäureanhydrid-pfropfpolyolefinen oder aus Polyisocyanaten enthalten.

Die erfindungsgemäßen Streifen setzen sich aus mindestens drei Bestandteilen, einem Thermoplasten, V-Graphit und rotem Phosphor zusammen.

Der Anteil an V-Graphit beträgt dabei 10 bis 55 Gew.%, bevorzugt 15 bis 45 Gew.%.

Als flexible, wasserunlösliche Thermoplasten eignen sich PVC, thermoplastische Polyolefine, wie Polyethylen, Ethylenvinylacetate, u.s.w., SBR-Kautschuke, Polyvinylacetat (Pvac), Polyetherblockamide (Pebax®), Styrolbutadienblockpolymere (Krator®, Cariflex®, Santopren®),

Polyisoprene, Polychloroprene, Polyethylenacrylsäureestercopolymere (Lotryf®), und andere Kautschuke.

Der Anteil an Thermoplast in der erfindungsgemäßen Mischung liegt, in Abhängigkeit vom gewählten Thermoplasten, bei 10 bis 50 Gew.%, bevorzugt bei 15 bis 45 Gew.%.

Als Flammhemmer wird erfindungsgemäß roter Phosphor eingesetzt. Gegebenenfalls wird der rote Phosphor in Kombination mit einem oder mehreren Flammhemmern mit einer Wasserlöslichkeit unter 0,5% bei Raumtemperatur eingesetzt.

Als Flammhemmern mit einer Wasserlöslichkeit unter 0,5% bei Raumtemperatur eignen sich für die erfindungsgemäße Zusammensetzung Metalloxide oder-hydroxide, Borphosphat und/oder Amidverbindungen aus der Gruppe Melamin, Melamincyanurat, Melaminphosphat, Melaminpolyphosphat Cyanursäure und Dicyandiamidcyanurat.

Geeignete Metalloxide und -hydroxide sind beispielsweise Titandioxid, Magnesiumhydroxid oder -oxid, Aluminiumhydroxid oder -oxid, Siliziumdioxid, Zinkoxid, Zirkonoxid, Manganoxid, Eisenoxide und andere wasserunlösliche Metalloxide bzw. - hydroxide.

Bevorzugt wird roter Phosphor in Kombination mit zumindest einer der oben angeführten Verbindungen eingesetzt.

Der Anteil der einzelnen Flammhemmer liegt bei 5 bis 30 Gew.%.

In Summe liegt der Anteil an eingesetzten Flammhemmem bevorzugt bei 15 bis 50 Gew.% und besonders bevorzugt bei 20 bis 45 Gew.%.

Gegebenenfalls wird als weitere Komponente ein Haftvermittler aus Polyisocyanaten für PVC und solche auf Basis von Methacrylsäure, Acrylsäure- oder Maleinsäureanhydrid-pfropfpolyolefine als Haftvermittler für Polyolefine zwischen der Selbstklebeausrüstung und der Wirksubstanz in Mengen von 1 - 10 Gew%, bevorzugt von 1 - 5 Gew.%, eingesetzt. Die Zugabe erhöht zudem die Schälfestigkeit nach DIN 53278 bei Raumtemperatur um das Dreifache und bei 50°C um das Zehnfache.

Die Herstellung der erfindungsgemäßen Streifen kann, in Abhängigkeit von den eingesetzten Thermoplasten, durch Extrusion, im Kalanderverfahren oder mittels der Streich- und Trocknungstechnik erfolgen.

So werden beispielsweise Mischungen, die PVC, thermoplastische Polyolefine, wie Ethylenvinylacetat oder SBR enthalten, bevorzugt mittels Extrusion in einem Extruder, oder im Kalanderverfahren im Pflugscharmischer, Ko-kneter, Mühle und Kalander zu den erfindungsgemäßen Streifen verarbeitet.

SBR-Kautschuke, Pvac und Polychloroprene beispielsweise, werden bevorzugt als wässrige Dispersionen mittels der Streich- und Trocknungstechnik verarbeitet.

Die erfindungsgemäßen Streifen werden in Form von Platten hergestellt, die anschließend auf die erforderlichen Maße geschnitten werden oder als maßgerechte Bänder hergestellt, die bevorzugt eine Breite von 10 bis 60 mm und eine Höhe von 1 bis 10 mm aufweisen.

Besonders bevorzugte Maße ergeben sich aus der Anwendung in Brandschutztüren mit Höhen von 1- 2mm und Breiten von 10- 40 mm und jener in Rohrmanschetten mit Abmessungen von Höhen von 5-10 mm und Breiten zwischen 60 und 30 mm.

Durch die erfindungsgemäße Verwendung von rotem Phosphor gegebenenfalls in Kombination mit Metalloxiden oder - hydroxiden, Borphosphat und/oder Amidverbindungen wird sowohl die Festigkeit des expandierten Graphits, seine Gasdurchlässigkeit, Wärmeleitzahl und Brennbarkeit günstig beeinflusst.

Die erfindungsgemäßen Streifen zeichnen sich zudem durch einen im Vergleich zum Stand der Technik erhöhten Brandwiderstandszeiten in Türen, Fenstern, Rohrmanschetten und Fugen aus.

Versuche zeigen, dass nach allen Herstellmethoden (Extrusion, Kalandrieren und Streich- und Trockentechnik) Streifen erhalten werden, die einen im Vergleich zur Technik höheren Glührückstand bei 800°C aufweisen. Werden diese Streifen einem Brandtest nach der Einheitstemperaturkurve unterworfen, indem gleichschwere Streifen zum Verschluss einer Fuge herangezogen werden, so ist bei den erfindungsgemäßen Streifen die Zeitspanne, bis 300°C an der Kaltseite erreicht werden, immer größer.

### Beispiel 1-10 und Vergleichsbeispiel V1, V2:

Auf einem Zweischneckenextruder der Fa. Leistritz wurden folgende Mischungen der Tab.1 zu 20x2mm Streifen verarbeitet. Die mittlere Extrusionstemperatur betrug 150°C, der Ausstoß lag bei 10 kg/h.

Der erhöhte Brandwiderstand der erfindungsgemäß hergestellten Streifen wurde durch den erhöhten Glührückstand bei 800°C/15 min in Tab.2 gemessen. Abkürzungen für verwendete Einsatzstoffe:

| | |
|---|---|
| Ethylenvinylacetat | Evatane 28-15 der Fa. ATOFINA |
| SBR- Kautschuk | Heyplast SK 50 Z der Fa.Tiefenbacher |
| EBa Ethylenacrylsäureestercopolymere | Lotryl 35 Ba 40 der Fa. ATOFINA |
| XTA-1 | Propfpolymer aus MSA auf Polypropylen |

In den Vergleichsversuchen wurden Flammhemmer gemäß dem Stand der Technik eingesetzt:

| | |
|---|---|
| V1 | Ethylendiaminphosphat (EDAP) |
| V2 | Ammoniumdihydrogenphosphat (ADHP) |

**Tab.1**

| Einsatzstoffe | Nr. 1 | 2 | 3 | 4 | 5 | 6 | 7 | 8 | 9 | 10 | V1 | V2 |
|---|---|---|---|---|---|---|---|---|---|---|---|---|
| EVA | 30 | 30 | 30 | 30 | 30 | | | | | | 30 | 40 |
| SBR | | | | | | 30 | 30 | | | | | |
| EBa | | | | | | | | 30 | 30 | 30 | | |
| V- Graphit | 20 | 30 | 30 | 20 | 15 | 35 | 28 | 30 | 42 | 35 | 35 | 35 |
| P rot | 20 | 15 | 25 | 15 | 15 | 15 | 15 | 15 | 10 | 20 | | |
| XTA-1 | 5 | 5 | 5 | 5 | 5 | 5 | 5 | 5 | 5 | 5 | | |
| TiO2 | 25 | 20 | 10 | | | | | 20 | 13 | 10 | | |
| MgO | | | | 30 | | | | | | | | |
| Al2O3 | | | | | 25 | | | | | | | |
| SiO2 | | | | | | 15 | 22 | | | | | |
| ADHP | | | | | | | | | | | | 25 |
| EDAP | | | | | | | | | | | 35 | |

**Tab 2: Feuerwiderstand**

| | | | | | | | | | | | | |
|---|---|---|---|---|---|---|---|---|---|---|---|---|
| Glührückstand % 800°C/15min | 52 | 48 | 50 | 52 | 48 | 53 | 51 | 50 | 52 | 50 | 29 | 31 |
| Fugentemp. 300°C Min | 170 | 160 | 165 | 170 | 168 | 165 | 160 | 155 | 158 | 160 | 155 | 140 |

### Beispiel 11-20 und V3+V4:

Es wurden intumeszierende Streifen nach der Streich- und Trocknungstechnik hergestellt. Bindemittel waren in diesem Fall wässrige Dispersionen. Die Mischungen der Tab. 3 wurden auf ein Glasgewebe in Dicken von 2-4mm aufgerakelt und in einem Trocknungskanal bei 170°C getrocknet. Die Fahrgeschwindigkeit betrug 3m/min und war so bemessen, dass die Bahn den Tunnel trocken verließ. Anschließend konnten aus den Bahnen Streifen unterschiedlichster Breiten geschnitten werden.

### Abkürzungen für verwendeten Einsatzstoffe:

| | |
|---|---|
| SBR | Styrol-Butadien-Kautschuk Baystal S 44R fest Fa. Polymer Latex; |
| Pvac | Polyvinylacetat fest, Airflex EF 41, Fa. Air Products |

Additive sind Dispergatoren, Entschäumer, Viskositätsregulatoren u.a.m,

In den Vergleichsversuchen wurden Flammhemmer gemäß dem Stand der Technik eingesetzt:

| | |
|---|---|
| V1, V2 | Ethylendiaminphosphat (EDAP) |

**Tab.3**

| Einsatzstoffe | Nr. | 11 | 12 | 13 | 14 | 15 | 16 | 17 | 18 | 19 | 20 | V1 | V2 |
|---|---|---|---|---|---|---|---|---|---|---|---|---|---|
| SBR (fest) | | | | | | | 20 | 20 | 20 | 20 | 20 | 20 | |
| PVac (fest) | | 20 | 20 | 20 | 20 | 20 | | | | | | | 20 |
| V-Graphit | | 30 | 40 | 40 | 35 | 44 | 30 | 40 | 30 | 35 | 44 | 44 | 44 |
| Phosphor rot | | 20 | 15 | 25 | 20 | 15 | 25 | 20 | 20 | 20 | 18 | | |
| TiO2 | | 25 | 20 | 10 | | | 20 | 15 | 25 | | 13 | | |
| Al2O3 | | | | | 20 | | | | | 20 | | | |
| MgO | | | | | | 16 | | | | | | | |
| EDAP | | | | | | | | | | | | 31 | 31 |
| Additive | | 5 | 5 | 5 | 5 | 5 | 5 | 5 | 5 | 5 | 5 | 5 | 5 |

**Tab. 4**

| | | | | | | | | | | | | |
|---|---|---|---|---|---|---|---|---|---|---|---|---|
| Feuerwiderstand Glührückstand% 800°C/15min | 48 | 50 | 52 | 53 | 44 | 48 | 50 | 52 | 51 | 44 | 28 | 30 |
| Fugentemp 300°C Min | 160 | 165 | 163 | 165 | 170 | 165 | 168 | 170 | 165 | 168 | 155 | 158 |

### Beispiel 21:

Es wurde die Schälfestigkeit diverser Thermoplasten mit und ohne Haftvermittler er mittelt:

**Tab.5: Schälfestigkeit nach DIN 53278**

| Probe | Schälfestigkeit N/cm bei 25°C | 50°C |
|---|---|---|
| Nullproben (SBR, EVA, PVac, EBa) | 2- 3 | 0,2- 0,8 |
| +5% XTA-1 MSAPfpopfPP | 7 | 5,5 |
| + 5% TPEV 5010 | 3,5 | 1,0 |
| + 5% TPEV 1402 PB | 5,0 | 4,0 |
| Nullprobe PVC | 3- 4 | 0,1- 0,5 |
| + 5% Polyisocyanat | 8 | 4,5 |

XTA-1 wurde selbst durch Pfropfen von MSA auf Polypropylen in Gegenwart von Peroxiden hergestellt. Polyisocyanat ist Thiophosphorsäure tris (p-isocyanatophenyl) ester Desmodur RF 100% (Fa. Bayer)

TPEV 5010 und TPEV 1402 PB sind Propfpolymere (Acrylsäure auf EVA) der Fa. Kometra

### Beispiel 22-31 und Vergleichsbeispiel V5, V6:

Auf einem Einschneckenextruder der Fa. Cincinnati Alpha 45 wurden folgende Mischungen der Tab.6 zu 20x2mm Streifen verarbeitet. Die mittlere Extrusionstemperatur betrug 150°C, der Ausstoß lag bei 10 kg/h.

Der erhöhte Brandwiderstand der erfindungsgemäß hergestellten Bändchen wird durch den erhöhten Glührückstand bei 800°C/15 min in Tab.7 gemessen. Abkürzungen für verwendeten Einsatzstoffe:

| | |
|---|---|
| LDPE | Low density polyethylene FT 7245; Fa. Borealis |
| EVA | TANE 28-15 Fa. ATOFINA |
| PVC | Rottolin V 02535; Weich-PVC, Fa. Rottolin |

In den Vergleichsversuchen wurden Flammhemmer gemäß dem Stand der Technik eingesetzt:

| | |
|---|---|
| V1 | Ethylendiaminphasphat (EDAP) |
| V2 | Ammoniumdihydrogenphosphat (ADHP) |

**Tab.6**

| Einsatzstoffe Nr. | 22 | 23 | 24 | 25 | 26 | 27 | 28 | 29 | 30 | 31 | V1 | V2 |
|---|---|---|---|---|---|---|---|---|---|---|---|---|
| PVC | | | | | 41 | 41 | | 41 | 36 | 36 | | 41 |
| EVA | 25 | 25 | 25 | 25 | 25 | | | | | | 25 | |
| LDPE | 16 | 16 | 16 | 16 | 16 | | | | | | 16 | |
| V-Graphit | 35 | 35 | 35 | 35 | 35 | 35 | 35 | 35 | 35 | 35 | 35 | 35 |
| Borphosphat (Budit B594) | 8 | 8 | 8 | 8 | 12 | 8 | 8 | 8 | 8 | 12 | | |
| P rot | 8 | 8 | 8 | 8 | 12 | 8 | 8 | 8 | 8 | 12 | | |
| Melamin | 8 | | | | | | 8 | | | | | |
| Melaminpolyphosphat B 3141 | | 8 | | | | | 8 | | | | | |
| Cyanursäure | | | 8 | | | | | 8 | | | | |
| Melamincyanurat | | | | 8 | | | | | 8 | | | |
| EDAP | | | | | | | | | | | 24 | |
| ADHP | | | | | | | | | | | | 24 |
| Desmodur RF | | | | | | | | 5 | 5 | | | |

**Tab 7:Feuerwiderstand**

| | | | | | | | | | | | | |
|---|---|---|---|---|---|---|---|---|---|---|---|---|
| Glührückstand % 800°C/15min | 52 | 48 | 50 | 52 | 48 | 53 | 52 | 50 | 52 | 50 | 29 | 30 |
| Fugentemp. 300°C Min | 170 | 160 | 165 | 170 | 168 | 165 | 160 | 155 | 158 | 160 | 155 | 140 |

### Beispiel 31-41 und V7+V8:

Es wurden intumeszierende Streifen nach der Streich- und Trocknungstechnik hergestellt. Bindemittel waren in diesem Fall wässrige Dispersionen. Die Mischungen der Tab. 8 wurden auf ein Glasgewebe in Dicken von 2-4mm aufgerakelt und in einem Trocknungskanal bei 170°C getrocknet. Die Fahrgeschwindigkeit betrug 3m/min und war so bemessen, dass die Bahn den Tunnel trocken verließ. Anschließend konnten aus den Bahnen Bänder unterschiedlichster Breiten geschnitten werden.

Abkürzungen für verwendeten Einsatzstoffe:

| | |
|---|---|
| SBR | Styrol-Butadien-Kautschuk Baystal S 44R fest; Fa.Polymer Latex |
| Pvac | Polyvinylacetat fest, Airflex EF 41, Fa. Air Products |

In den Vergleichsversuchen wurden Flammhemmer gemäß dem Stand der Technik eingesetzt:

| | |
|---|---|
| V1, V2 | Ethylendiaminphosphat (EDAP) |

**Tab.8**

| Einsatzstoffe | Nr. 32 | 33 | 34 | 35 | 36 | 37 | 38 | 39 | 40 | 41 | V1 | V2 |
|---|---|---|---|---|---|---|---|---|---|---|---|---|
| SBR (fest) | | | | | | 20 | 20 | 20 | 20 | 20 | 20 | |
| PVac (fest) | 20 | 20 | 20 | 17 | 20 | | | | | | | 20 |
| V-Graphit | 44 | 44 | 44 | 44 | 44 | 44 | 44 | 44 | 44 | 44 | 44 | 44 |
| Borphosphat | 12 | 12 | 12 | 12 | | 12 | 12 | 12 | 12 | | | |
| Phosphor rot | 12 | 12 | 12 | 12 | 18 | 12 | 12 | 12 | 12 | 18 | | |
| Melamin | 12 | | | | 18 | 12 | | | | 18 | | |
| Melaminpolyphosphat | | 12 | | | | | 12 | | | | | |
| Cyanursäure | | | 12 | | | | | 12 | | | | |
| Melamincyanurat | | | | 12 | | | | | 12 | | | |
| EDAP | | | | | | | | | | | 36 | 36 |
| XTA-1 | | | | 3 | | | | | | | | |
| Tab. 9 | | | | | | | | | | | | |

Feuerwiderstand

| | | | | | | | | | | | | |
|---|---|---|---|---|---|---|---|---|---|---|---|---|
| Glührückstand% 800°C/15min | 48 | 50 | 52 | 54 | 44 | 48 | 50 | 52 | 51 | 44 | 28 | 30 |
| Fugentemp 300°C Min | 160 | 165 | 163 | 165 | 170 | 165 | 168 | 170 | 165 | 168 | 155 | 158 |

## Patentansprüche

1. Intumeszierende, flexible Brandschutzstreifen mit, bestehend aus einem flexiblen, wasserunlöslichen Thermoplasten, V-Graphit und rotem Phosphor, **dadurch gekennzeichnet, dass** die Brandschutzstreifen zusätzlich Borphosphat und/oder einen Haftvermittler aus Acrylsäure-, Methacrylsäure- oder Maleinsäureanhydrid-pfropfpolyolefinen oder aus Polyisocyanaten enthalten.

2. Brandschutzstreifen nach Anspruch 1, **dadurch gekennzeichnet, dass** der rote Phosphor in Kombination mit einem oder mehreren weiteren Flammhemmem aus der Gruppe der Metalloxide oder -hydroxide und/oder Amidverbindungen aus der Gruppe Melamin, Melamincyanurat, Melaminphosphat, Melaminpolyphosphat Cyanursäure und Dicyandiamidcyanurat eingesetzt wird.

3. Brandschutzstreifen nach Anspruch 1, **dadurch gekennzeichnet, dass** der Anteil an V-Graphit 10 bis 55 Gew.% beträgt.

4. Brandschutzstreifen nach Anspruch 1, **dadurch gekennzeichnet, dass** als Thermoplaste PVC, Polyolefine, SBR-Kautschuke, Polyvinylacetat, Polyetherblockamide, Styrolbutadienblockpolymere oder Polyethylenacrylsäureestercopylymere eingesetzt werden.

5. Brandschutzstreifen nach Anspruch 4, **dadurch gekennzeichnet, dass** als Thermoplaste PVC, Polyethylen, Ethylenvinylacetat, Ethylenacrylsäureester, Polyvinylacetat, SBR oder Polystyrolpolybutadienblockkopolymere eingesetzt werden.

6. Brandschutzstreifen nach Anspruch 1, **dadurch gekennzeichnet, dass** der Anteil an Thermoplast bei 10 bis 50 Gew.% liegt.

7. Brandschutzstreifen nach Anspruch 2, **dadurch gekennzeichnet; dass** als Metalloxide und - hydroxide Titandioxid, Magnesiumhydroxid oder -oxid, Aluminiumhydroxid oder -oxid, Siliziumdioxid, Zinkoxid, Zirkonoxid, Manganoxid, Eisenoxide eingesetzt werden.

8. Brandschutzstreifen nach Anspruch 1 und 2, **dadurch gekennzeichnet, dass** der Anteil an Borphosphat und der einzelnen Flammhemmer bei 5 bis 30 Gew.% liegt und der Anteil an eingesetzten Flammhemmem insgesamt bei 15 bis 50 Gew.% liegt.

9. Verwendung von Brandschutzstreifen gemäß Anspruch 1 oder 2 in Türen, Fenstern und Fugen und bei Rohrmanschetten.

## Claims

1. Intumescent, flexible fire-protection strips composed of a flexible, water-insoluble thermoplastic, vermicular graphite and red phosphorus, **characterized in that** the fire-protection strips further comprise boron phosphate and/or an adhesion promoter comprising acrylic acid-, methacrylic acid- or maleic anhydride-graft-polyolefins or comprising polyisocyanates.

2. Fire-protection strips according to Claim 1, **characterized in that** the red phosphorus is used in combination with one or more further flame retardants from the group of metal oxides or metal hydroxides and/or amide compounds from the group consisting of melamine, melamine cyanurate, melamine phosphate, melamine polyphosphate, cyanuric acid and dicyandiamide cyanurate.

3. Fire-protection strips according to Claim 1, **characterized in that** the fraction of vermicular graphite is 10% to 55% by weight.

4. Fire-protection strips according to Claim 1, **characterized in that** thermoplastics used are PVC, polyolefins, SBR rubbers, polyvinyl acetate, polyether-block-amides, styrene-butadiene block polymers or polyethylene-acrylic ester copolymers.

5. Fire-protection strips according to Claim 4, **characterized in that** thermoplastics used are PVC, polyethylene, ethylene-vinyl acetate, ethylene-acrylic esters, polyvinyl acetate, SBR or polystyrene-polybutadiene block copolymers.

6. Fire-protection strips according to Claim 1, **characterized in that** the fraction of thermoplastic is 10% to 50% by weight.

7. Fire-protection strips according to Claim 2, **characterized in that** metal oxides and metal hydroxides used are titanium dioxide, magnesium hydroxide or oxide, aluminium hydroxide or oxide, silicon dioxide, zinc oxide, zirconium oxide, manganese oxide, iron oxides.

8. Fire-protection strips according to Claim 1 and 2, **characterized in that** the fraction of boron phosphate and of the individual flame retardants is 5% to 30% by weight and the fraction of flame retardants used in total is 15% to 50% by weight.

9. Use of fire-protection strips according to Claim 1 or 2 in doors, windows and joints and for pipe sleeves.

## Revendications

1. Bandes de protection contre l'incendie, souples et intumescentes, constituées d'un thermoplastique souple et insoluble dans l'eau, de graphite V et de phosphore rouge, **caractérisées en ce que** les bandes de protection contre l'incendie contiennent, en plus, du phosphate de bore et / ou un adhésif composé de polyoléfines greffées d'acide acrylique, d'acide méthacrylique ou d'anhydride d'acide maléique ou composé de polyisocyanates.

2. Bandes de protection contre l'incendie selon la revendication 1, **caractérisées en ce que** le phosphore rouge est utilisé en combinaison avec un ou plusieurs autres ignifuges choisis dans le groupe constitué par les oxydes ou hydroxydes métalliques et / ou les composés d'amide choisis dans le groupe constitué par la mélamine, le cyanurate de mélamine, le phosphate de mélamine, le polyphosphate de mélamine, l'acide cyanurique et le cyanurate de dicyanodiamide.

3. Bandes de protection contre l'incendie selon la revendication 1, **caractérisées en ce que** la proportion de graphite V est de 10 à 55 % en poids.

4. Bandes de protection contre l'incendie selon la revendication 1, **caractérisées en ce que**, à titre de thermoplastiques, on utilise du PVC, des polyoléfines, des caoutchoucs SBR, de l'acétate de polyvinyle, des amides à blocs de polyéther, des polymères à blocs de styrène-butadiène ou des copolymères d'ester d'acide acrylique-polyéthylène.

5. Bandes de protection contre l'incendie selon la revendication 4, **caractérisées en ce que**, à titre de thermoplastiques, on utilise du PVC, du polyéthylène, de l'éthylène-acétate de vinyle, de l'ester d'acide acrylique-éthylène, de l'acétate de polyvinyle, du SBR ou des copolymères à blocs de polystyrène-polybutadiène.

6. Bandes de protection contre l'incendie selon la revendication 1, **caractérisées en ce que** la proportion de thermoplastique est environ de 10 à 50 % en poids.

7. Bandes de protection contre l'incendie selon la revendication 2, **caractérisées en ce que**, à titre d'oxydes et hydroxydes métalliques, on utilise du dioxyde de titane, de l'hydroxyde ou de l'oxyde de magnésium, de l'hydroxyde ou de l'oxyde d'aluminium, du dioxyde de silicium, de l'oxyde de zinc, de l'oxyde de zircon, de l'oxyde de manganèse, des oxydes de fer.

8. Bandes de protection contre l'incendie selon la revendication 1 et 2, **caractérisées en ce que** la proportion de phosphate de bore et des différents ignifuges est environ de 5 à 30 % en poids et la proportion des ignifuges utilisés est environ de 15 à 50 % en poids au total.

9. Utilisation des bandes de protection contre l'incendie selon la revendication 1 et 2 dans des portes, des fenêtres et des joints et pour des raccords de tuyaux.
